# FASCICULE DE BREVET EUROPEEN

(11) **EP 3 515 872 B1**
(45) Date de publication et mention de la délivrance du brevet: **07.06.2023**
(21) Numéro de dépôt: 17780504.1
(22) Date de dépôt: 25.09.2017
(51) Int. Cl.: C03C 17/36

(54) **SUBSTRAT REVETU D'UN REVETEMENT BAS-EMISSIF**
MIT EINER EMISSIONSARMEN BESCHICHTUNG BESCHICHTETES SUBSTRAT
SUBSTRATE COATED WITH A LOW-EMISSIVITY COATING

(30) Priorité: 26.09.2016 FR 1659029
(43) Date de publication de la demande: 31.07.2019
(73) Titulaire: SAINT-GOBAIN GLASS FRANCE, 92400 Courbevoie (FR)
(72) Inventeur: GUIMARD, Denis, 75013 Paris (FR); SKOLSKI, Johann, 75018 Paris (FR)
(74) Mandataire: Saint-Gobain Recherche
(86) Numéro de dépôt international: PCT/FR2017/052570
(87) Numéro de publication internationale: WO 2018/055311

(56) Documents cités:
- WO-A1-2010/142926
- WO-A1-2013/156721
- WO-A1-2014/132000
- WO-A2-2013/181042
- WO-A2-2014/191485

## Description

L'invention se rapporte au domaine des couches minces inorganiques, notamment déposées sur des substrats en verre. Elle concerne plus particulièrement un procédé d'obtention d'un matériau comprenant un substrat revêtu sur au moins une face d'un empilement de couches minces bas-émissif.

De nombreuses couches minces sont déposées sur des substrats, notamment en verre plat ou faiblement bombé, afin de conférer aux matériaux obtenus des propriétés particulières : propriétés optiques, par exemple de réflexion ou d'absorption de rayonnements d'un domaine de longueurs d'onde données, propriétés de conduction électrique particulière, ou encore propriétés liées à la facilité de nettoyage ou à la possibilité pour le matériau de s'auto-nettoyer.

Un procédé couramment employé à l'échelle industrielle pour le dépôt de couches minces, notamment sur substrat verrier, est le procédé de pulvérisation cathodique assisté par champ magnétique, appelé procédé « magnétron ». Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur le substrat en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler le substrat sous différentes cibles, ce généralement dans un seul et même dispositif.

Ces couches minces sont le plus souvent à base de composés inorganiques : oxydes, nitrures, ou encore métaux. Leur épaisseur varie généralement de quelques nanomètres à quelques centaines de nanomètres, d'où leur qualificatif de « minces ».

Parmi les plus intéressantes figurent les couches minces à base d'argent métallique, lesquelles ont des propriétés de conduction électrique et de réflexion des rayonnements infrarouges, d'où leur utilisation dans des vitrages à contrôle solaire, notamment anti-solaires (visant à diminuer la quantité d'énergie solaire entrante) et/ou à faible émissivité (visant à diminuer la quantité d'énergie dissipée vers l'extérieur d'un bâtiment ou d'un véhicule).

Afin notamment d'éviter l'oxydation de l'argent et d'atténuer ses propriétés de réflexion dans le visible, la ou chaque couche d'argent est généralement insérée dans un empilement de couches. Dans le cas des vitrages à contrôle solaire ou à faible émissivité, la ou chaque couche mince à base d'argent est généralement disposée entre deux couches minces diélectriques à base d'oxyde ou de nitrure (par exemple en TiO₂, SnO₂ ou Si₃N₄). Peuvent être également disposées sous la couche d'argent une couche très fine destinée à favoriser le mouillage et la nucléation de l'argent (par exemple en oxyde de zinc ZnO) et sur la couche d'argent une seconde couche très fine (sacrificielle, par exemple en titane) destinée à protéger la couche d'argent au cas où le dépôt de la couche subséquente est réalisé dans une atmosphère oxydante ou en cas de traitements thermiques conduisant à une migration d'oxygène au sein de l'empilement. Ces couches sont respectivement appelées couche de mouillage et couche de bloqueur. WO 2010/142926 décrit des empilements de couches minces bas émissif comprenant notamment une couche d'argent, des couches diélectriques à base de TiO₂ et Si₂N₃, une couche de mouillage à base de ZnO et une couche de bloqueur en titane.

Les couches d'argent présentent la particularité de voir certaines de leurs propriétés améliorées lorsqu'elles sont dans un état au moins partiellement cristallisé. On cherche généralement à augmenter au maximum le taux de cristallisation de ces couches (la proportion massique ou volumique de matière cristallisée) et la taille des grains cristallins (ou la taille de domaines cohérents de diffraction mesurés par des méthodes de diffraction des rayons X). Il est notamment connu que les couches d'argent présentant un taux de cristallisation élevé et par conséquent une faible teneur résiduelle en grains nanométriques présentent une émissivité et une résistivité plus basses ainsi qu'une transmission dans le visible plus élevée que des couches d'argent majoritairement nano-cristallisées. La conductivité électrique et les propriétés de faible émissivité de ces couches sont ainsi améliorées. L'augmentation de la taille des grains s'accompagne en effet d'une diminution des joints de grains, favorable à la mobilité des porteurs de charge électrique.

Les couches d'argent déposées par procédé magnétron sont généralement majoritairement voire totalement nano-cristallisées (la taille moyenne des grains cristallins étant inférieure à quelques nanomètres), et des traitements thermiques se révèlent nécessaires pour obtenir le taux de cristallisation souhaité ou la taille de grains désirée.

Il est connu d'effectuer un recuit laser local et rapide de revêtements comprenant une ou plusieurs couches d'argent. Pour cela on fait défiler le substrat avec le revêtement à recuire sous une ligne laser, ou bien une ligne laser au-dessus du substrat portant le revêtement. Le recuit laser permet de chauffer des revêtements minces à des températures élevées, de l'ordre de plusieurs centaines de degrés, tout en préservant le substrat sous-jacent. Les vitesses de défilement sont bien entendu de préférence les plus élevées possibles, avantageusement au moins de plusieurs mètres par minute. Le choix de la vitesse de défilement adéquate résulte d'un compromis entre productivité d'une part et efficacité du traitement d'autre part. En effet, plus la vitesse de défilement est faible, plus la quantité d'énergie absorbée par le revêtement est importante et meilleure sera la cristallisation de la ou des couches d'argent.

Afin d'obtenir les vitesses de dépôt convenables, les couches minces diélectriques à base d'oxydes sont généralement déposée par procédé magnétron réactif à partir d'une cible métallique ou en oxyde sous-stoechiométrique dans un plasma contenant de l'oxygène. Les paramètres de procédé, sont alors généralement réglés de façon à obtenir l'oxyde souhaité en proportion stœchiométrique. Cependant, il n'est pas rare que, suite à une fluctuation de ces paramètres au cours du procédé de dépôt, la couche d'oxyde déposée puisse présenter une composition sous-stoechiométrique. Il a été observé que, dans ce cas, le gain de résistivité des couches d'argent après recuit laser n'était pas aussi bon qu'attendu. En effet, en deçà d'un certain seuil de vitesse de défilement, le gain de résistivité peut avoir tendance à diminuer avec la diminution de la vitesse de défilement alors que celui-ci devrait au contraire augmenter.

L'invention, qui est définie par les revendications annexées, a pour but de proposer un procédé permettant d'obvier les inconvénients mentionnés ci-dessus. A cet effet, l'invention a pour objet un procédé d'obtention d'un matériau comprenant un substrat choisi parmi une feuille de verre, de vitrocéramique, ou d'une matière organique polymérique, revêtu sur au moins une face d'un empilement de couches minces comprenant les étapes suivantes :
- on dépose sur au moins une face dudit substrat un empilement de couches minces comprenant une première couche diélectrique, une couche de mouillage, une couche d'argent et une deuxième couche diélectrique,
- on traite thermiquement la au moins une face revêtue à l'aide d'au moins un rayonnement laser émettant dans au moins une longueur d'onde comprise entre 100 et 2000 nm, de préférence de sorte que la résistance carrée de l'empilement est diminuée d'au moins 5% ;
caractérisé en ce qu'au moins une desdites premières et deuxièmes couches diélectriques est une couche diélectrique à base d'oxyde sous-stœchiométrique et en ce qu'une couche donneuse d'oxygène est disposée au voisinage de la couche diélectrique à base d'oxyde sous-stoechiométrique, ladite couche donneuse d'oxygène étant à base d'un oxyde dont le potentiel redox est inférieur au matériau de la couche de mouillage. Dans un mode de réalisation particulier, la première couche diélectrique est une couche diélectrique à base d'oxyde sous-stoechiométrique et une couche donneuse d'oxygène est disposée au voisinage de la première couche diélectrique à base d'oxyde sous-stœchiométrique, notamment au contact direct de la première couche diélectrique, par exemple entre la couche diélectrique et la couche de mouillage. La deuxième couche diélectrique peut également être une couche diélectrique à base d'oxyde, notamment sous-stoechiométrique. Dans ce cas, une deuxième donneuse d'oxygène peut être disposée au voisinage de la deuxième couche diélectrique, notamment au contact direct de la première couche diélectrique, par exemple entre la couche diélectrique et la couche de mouillage.

Dans la présente demande, l'expression « au voisinage de » associé à la position d'une première couche (en particulier la couche donneuse d'oxygène) par rapport à une deuxième couche (en particulier la couche diélectrique à base d'oxyde) signifie que la première couche peut-être au-dessus ou au-dessous de la deuxième couche, celles-ci pouvant être au contact ou séparée entre elles par d'autres couches, notamment jusqu'à deux autres couches, de préférence au plus une autre couche. Les termes « au-dessous » et « au-dessus », associés à la position d'une première couche par rapport à une deuxième couche, signifient que la première couche est plus proche, respectivement plus éloignée, du substrat que la deuxième couche. Ces termes n'excluent cependant pas la présence d'autres couches entre lesdites première et deuxième couches. Au contraire, une première couche « en contact direct » avec une deuxième couche signifie qu'aucune autre couche n'est disposée entre celles-ci. Il en va de même pour les expressions « directement au-dessus » et « directement au-dessous ». Ainsi, il est entendu que, sauf s'il est indiqué autrement, d'autres couche peuvent être intercalées entre chacune des couches de l'empilement.

Sans vouloir être lié à une quelconque théorie, il est en effet supposé que lorsque la couche diélectrique à base d'oxyde est sous-stœchiométrique en oxygène, celle-ci tend à réduire les couches environnantes en « pompant » l'oxygène des couches environnantes, notamment de la couche de mouillage, sous l'effet du recuit laser. Cela aurait pour effet d'altérer la couche de mouillage sur laquelle la couche d'argent se cristallise et de détériorer par conséquent la qualité de la couche d'argent. La présence d'une couche donneuse d'oxygène au voisinage de la couche diélectrique à base d'oxyde permet d'empêcher ce phénomène. L'oxygène pompé par la couche diélectrique à base d'oxyde proviendra en effet prioritairement de la couche donneuse en oxygène, ce qui a pour effet de protéger de protéger la couche de mouillage.

Le substrat est une feuille de verre, de vitrocéramique, ou d'une matière organique polymérique. Il est de préférence transparent, incolore (il s'agit alors d'un verre clair ou extra-clair) ou coloré, par exemple en bleu, vert, gris ou bronze. Le verre est de préférence de type silico-sodo-calcique, mais il peut également être en verre de type borosilicate ou alumino-borosilicate. Les matières organiques polymériques préférées sont le polycarbonate ou le polyméthacrylate de méthyle ou encore le polyéthylènetérephtalate (PET). Le substrat présente avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le substrat de verre est de préférence du type flotté, c'est-à-dire susceptible d'avoir été obtenu par un procédé consistant à déverser le verre fondu sur un bain d'étain en fusion (bain « float »). Dans ce cas, la couche à traiter peut aussi bien être déposée sur la face « étain » que sur la face « atmosphère » du substrat. On entend par faces « atmosphère » et « étain », les faces du substrat ayant été respectivement en contact avec l'atmosphère régnant dans le bain float et en contact avec l'étain fondu. La face étain contient une faible quantité superficielle d'étain ayant diffusé dans la structure du verre. Le substrat de verre peut également être obtenu par laminage entre deux rouleaux, technique permettant en particulier d'imprimer des motifs à la surface du verre.

On entend par verre clair un verre silico-sodo-calcique obtenu par flottage, non revêtu de couches, et présentant une transmission lumineuse de l'ordre de 90%, une réflexion lumineuse de l'ordre de 8% et une transmission énergétique de l'ordre de 83% pour une épaisseur de 4 mm. Les transmissions et réflexions lumineuses et énergétiques sont telles que définies par la norme NF EN 410. Des verres clairs typiques sont par exemple commercialisés sous la dénomination SGG Planilux par la société Saint-Gobain Glass France ou sous la dénomination Planibel Clair par la société AGC Flat Glass Europe. Ces substrats sont classiquement employés pour la fabrication de vitrages bas-émissifs.

Le procédé selon l'invention n'est bien évidemment pas limité aux dépôts réalisés sur un substrat de verre clair ou sur un substrat de 4 mm d'épaisseur. Le revêtement peut être déposé sur un substrat choisi parmi une feuille de verre, de vitrocéramique, et une matière organique polymérique, mais l'absorption de l'empilement telle que défini selon l'invention est considéré comme ayant été déposé sur un substrat de verre clair dont l'épaisseur est de 4 mm.

L'empilement de couches minces est déposé de préférence par pulvérisation cathodique. Il comprend successivement à partir du substrat une première couche diélectrique, une couche de mouillage, une couche d'argent et une deuxième couche diélectrique, au moins une desdites premières et deuxièmes couches diélectriques étant une couche diélectrique à base d'oxyde et une couche donneuse d'oxygène est disposée au voisinage de la couche diélectrique à base d'oxyde, de préférence en contact direct (directement au-dessus ou directement au-dessous) avec la couche diélectrique à base d'oxyde.

Par « couche donneuse d'oxygène » on entend une couche à base d'oxyde qui est susceptible de donner de l'oxygène à la couche diélectrique à base d'oxyde notamment lors du traitement thermique. La couche donneuse d'oxygène est à base d'un oxyde dont le potentiel redox est inférieur au matériau de la couche de mouillage, qui est de préférence l'oxyde de zinc. La couche donneuse d'oxygène sert de réservoir à oxygène à la couche diélectrique à base d'oxyde et protège ainsi la couche de mouillage en diminuant, voire en supprimant, la migration d'oxygène depuis la couche de mouillage vers la couche diélectrique à base d'oxyde lors du traitement thermique selon l'invention.

La couche donneuse d'oxygène est de préférence une couche à base d'oxyde mixte de d'étain et de zinc. Elle peut être par exemple une couche d'oxyde d'étain ou d'oxyde mixte d'étain et de zinc SnₓZn_{y}O avec une teneur atomique en étain de 0,3 ≤ x < 1,0 et x + y = 1 ; voire 0,5 ≤ x < 1,0 et x + y = 1. La couche donneuse d'oxygène peut être oxydée selon la stoechiométrie stable ou éventuellement sur-stœchiométrique en oxygène. La couche donneuse d'oxygène présente généralement une épaisseur de 1 à 30 nm, de préférence au moins 3, 4 voire 5 nm et au plus 20 nm, voir au plus 15 nm ou même 10 nm.

Lorsque la première couche diélectrique est une couche diélectrique à base d'oxyde, la couche donneuse d'oxygène est disposée au-dessous de la couche de mouillage, de préférence en contact direct (directement au-dessus ou directement au-dessous) avec la première couche diélectrique à base d'oxyde. Lorsque la deuxième couche diélectrique est une couche diélectrique à base d'oxyde, la couche donneuse d'oxygène est disposée au-dessus de la couche d'argent, de préférence en contact direct (directement au-dessus ou directement au-dessous) avec la deuxième couche diélectrique à base d'oxyde.

L'expression « couche diélectrique » au sens de la présente invention désigne une couche non métallique, c'est-à-dire qui n'est pas constituée de métal. Cette expression désigne notamment une couche constituée d'un matériau dont le rapport entre l'indice de réfraction et le coefficient d'extinction (n/k) sur toute la plage de longueur d'onde du visible (de 380 nm à 780 nm) est égal ou supérieur à 5.

La couche diélectrique à base d'oxyde est généralement sous-stoechiométrique, c'est-à-dire que la proportion d'oxygène est inférieure à celle la forme stable de l'oxyde considéré. Par exemple, pour un oxyde d'un métal divalent de formule stable MO, un oxyde sous-stoechiométrique peut être défini par la formule MOₓ avec x compris entre 0,6 et 0,99, de préférence entre 0,8 et 0,99 ; pour un oxyde d'un métal tétravalent de formule stable MO₂, un oxyde sous-stoechiométrique peut être défini par la formule MOₓ avec x compris entre 1,5 et 1,99 ; de préférence entre 1,8 et 1,99 ; pour un oxyde de métal trivalent de formule stable M₂O₃, un oxyde sous-stœchiométrique peut être défini par la formule M₂Oₓ avec x compris entre 2 et 2,99, de préférence entre 2,6 et 2,99 ; pour un oxyde de métal hexavalent de formule stable MO₃, un oxyde sous-stoechiométrique peut être défini par la formule MOₓ avec x compris entre 2 et 2,99, de préférence entre 2,6 et 2,99. Elle peut être par exemple une couche à base d'oxyde de titane, de silicium, de niobium ou de magnésium. La couche diélectrique à base d'oxyde est de préférence une couche d'oxyde de titane, notamment une couche d'oxyde de titane sous-stœchiométrique TiOₓ (x étant alors strictement inférieur à 2). Selon un mode de réalisation particulier, la valeur de x est de préférence inférieure ou égale à 1,8, notamment entre 1,5 et 1,8. Dans ce cas, la couche diélectrique participe à l'absorption du rayonnement laser ce qui permet ainsi d'améliorer la cristallisation de la couche d'argent et/ou d'augmenter la vitesse de défilement lors du traitement thermique, et donc la productivité. Selon un autre mode de réalisation particulier, la première couche diélectrique est une couche d'oxyde de titane faiblement sous-stoechiométrique, c'est-à-dire que la valeur x est supérieure ou égale à 1,8, de préférence supérieure à 1,9. Il n'est pas rare en effet que les paramètres de procédé, bien que fixés initialement pour déposer une couche de TiO₂ stoechiométrique (dans un souci notamment de réduire l'absorption résiduelle de l'empilement), puissent fluctuer au cours de la production de sorte que la couche effectivement déposée soit faiblement sous-stoechiométrique.

L'autre couche diélectrique (celle de la première ou deuxième couche diélectrique qui n'est pas nécessairement à base d'oxyde) peut être à base d'oxyde, éventuellement sous-stoechiométrique, notamment en oxyde de titane, en oxyde d'étain, en oxyde de silicium ou leurs mélanges, ou de nitrure, notamment en nitrure de silicium.

Dans un mode de réalisation particulier, chacune des première et deuxième couches diélectriques est une couche à base d'oxyde, en particulier une couche à base d'oxyde de titane, notamment une couche d'oxyde de titane sous-stoechiométrique TiOₓ telle que définie ci-dessus. Dans ce cas, l'empilement selon l'invention peut comprendre deux couches donneuses d'oxygène, respectivement au voisinage de chacune des première et deuxième couches diélectriques. Selon ce mode de réalisation, l'empilement peut comprendre successivement à partir du substrat une première couche diélectrique à base d'oxyde, une première couche donneuse d'oxygène, une couche de mouillage à base d'oxyde de zinc, une couche d'argent, une deuxième couche donneuse d'oxygène et une deuxième couche diélectrique à base d'oxyde ; alternativement, la première couche donneuse d'oxygène peut être disposée entre le substrat et la première couche diélectrique à base d'oxyde, et/ou la deuxième couche donneuse d'oxygène peut être disposée au-dessus de la deuxième couche diélectrique à base d'oxyde.

Les première et deuxième couches diélectriques ont généralement chacune une épaisseur de 10 à 60 nm, de préférence 15 à 50 nm.

L'empilement selon l'invention peut comprendre une couche de sur-bloqueur et/ou de de sous-bloqueur respectivement au-dessus ou au-dessous de la ou chaque couche d'argent et en contact direct avec celle-ci. Les couches de bloqueur (sous-bloqueur et/ou sur-bloqueur) sont généralement à base d'un métal choisi parmi le nickel, le chrome, le titane, le niobium, ou d'un alliage de ces différents métaux. On peut notamment citer les alliages nickel-titane (notamment ceux comprenant environ 50% en poids de chaque métal) ou les alliages nickel-chrome (notamment ceux comprenant 80% en poids de nickel et 20% en poids de chrome). La couche de sur-bloqueur peut encore être constituée de plusieurs couches superposées, par exemple, en s'éloignant du substrat, de titane puis d'un alliage de nickel (notamment un alliage nickel-chrome) ou l'inverse. Ces couches de bloqueur (sous-bloqueur et/ou sur-bloqueur) sont très fines, normalement d'une épaisseur inférieure à 1 nm, pour ne pas affecter la transmission lumineuse de l'empilement, et sont susceptibles d'être partiellement oxydées pendant le traitement thermique selon l'invention. D'une manière générale les couches de bloqueur sont des couches sacrificielles, susceptibles de capter l'oxygène provenant de l'atmosphère ou du substrat, évitant ainsi l'oxydation de la couche d'argent.

La couche de mouillage est généralement à base d'oxyde de zinc. Elle est de préférence constituée d'oxyde de zinc, éventuellement dopée à l'aluminium. La couche de mouillage est généralement disposée au-dessous de la couche d'argent et en contact direct avec celle-ci ou, lorsqu'une couche de bloqueur est présente, en contact direct avec la couche de bloqueur. Elle a généralement une épaisseur de 2 à 10 nm, de préférence de 3 à 8 nm.

L'empilement peut comprendre une ou plusieurs couches d'argent, notamment deux ou trois couches d'argent. Lorsque plusieurs couches d'argent sont présentes, l'architecture générale présentée ci-avant peut être répétée. Dans ce cas, la deuxième couche diélectrique relative à une couche d'argent donnée (donc situé au-dessus de cette couche d'argent) coïncide généralement avec la première couche diélectrique relative à la couche d'argent suivante. De préférence, l'épaisseur physique de la ou chaque couche d'argent est comprise entre 6 et 20 nm.

L'empilement peut comprendre d'autres couches, notamment entre le substrat et la première couche diélectrique, directement au-dessus de la couche d'argent (ou de sur-bloqueur), ou encore au-dessus de la deuxième couche diélectrique.

Une couche d'adhésion peut notamment être disposée directement au-dessus de la couche d'argent, ou si présente directement au-dessus de la couche de sur-bloqueur, afin d'améliorer l'adhésion entre la couche d'argent ou de sur-bloqueur et les couches supérieures. La couche d'adhésion peut être par exemple une couche d'oxyde de zinc, notamment dopé à l'aluminium, ou encore une couche d'oxyde d'étain. Elle a généralement une épaisseur de 2 à 10 nm.

La première couche diélectrique est de préférence déposée directement au-dessus du substrat. Pour adapter au mieux les propriétés optiques de l'empilement (notamment l'aspect en réflexion), une sous-couche peut alternativement être disposée entre la première couche diélectrique et le substrat, de préférence en contact direct avec ceux-ci. Cette sous-couche peut être une couche à base d'oxyde ou de nitrure, notamment de nitrure de silicium éventuellement dopé à l'aluminium. Elle a généralement une épaisseur de 2 à 30 mm, de préférence 3 à 20 nm, voire 5 à 15 nm.

Une couche de protection peut être disposée sur la deuxième couche diélectrique. Cette couche de protection constitue généralement la dernière couche de l'empilement et est destinée notamment à protéger l'empilement contre toutes agressions mécaniques (rayures...) ou chimiques. Elle peut être une couche à base d'oxyde ou de nitrure, notamment de nitrure de silicium. La couche de protection a généralement une épaisseur de 3 à 50 nm.

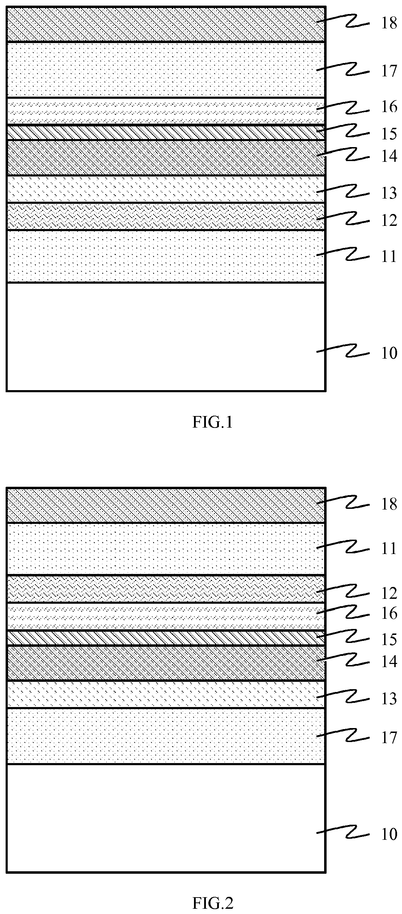

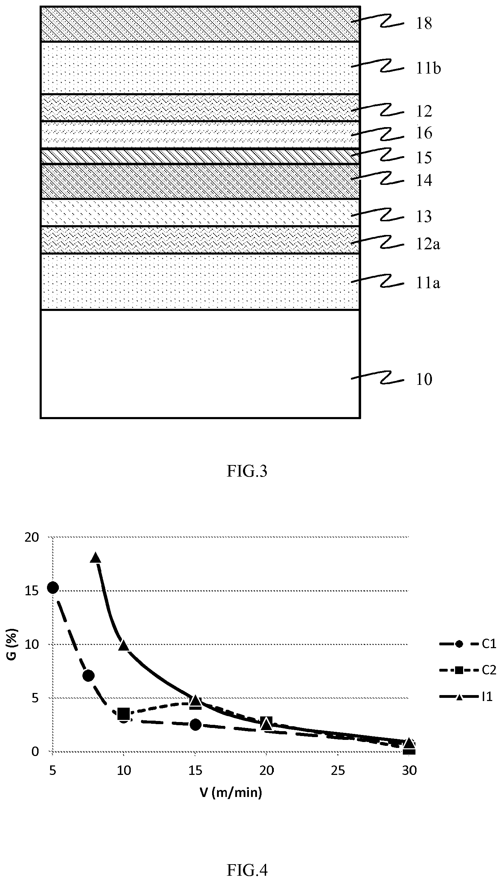

Les FIG.1 à 3 illustrent des exemples d'empilement selon l'invention. Dans un premier mode de réalisation illustré par la FIG.1, l'empilement comprend successivement à partir du substrat 10 une première couche diélectrique à base d'oxyde 11, une couche donneuse d'oxygène 12, une couche de mouillage 13, une couche d'argent 14, optionnellement une couche de bloqueur 15, optionnellement une couche d'adhésion 16, une deuxième couche diélectrique 17 et optionnellement une couche de protection 18. Alternativement, la couche donneuse d'oxygène 12 peut être disposée entre le substrat 10 et la couche diélectrique à base d'oxyde 11. Dans un deuxième mode de réalisation illustré par la FIG.2, l'empilement comprend successivement à partir du substrat 10 une première couche diélectrique 17, une couche de mouillage 13, une couche d'argent 14, optionnellement une couche de bloqueur 15, optionnellement une couche d'adhésion 16, une couche donneuse d'oxygène 12, une deuxième couche diélectrique à base d'oxyde 11 et optionnellement une couche de protection 18. Alternativement, la couche donneuse d'oxygène 12 peut être disposée au-dessus de la deuxième couche diélectrique à base d'oxyde 11 ou entre la deuxième couche diélectrique à base d'oxyde 11 et la couche de protection optionnelle 18. Dans un troisième mode de réalisation illustré par la FIG.3, l'empilement comprend successivement à partir du substrat 10 une première couche diélectrique à base d'oxyde 11a, une première couche donneuse d'oxygène 12a, une couche de mouillage 13, une couche d'argent 14, optionnellement une couche de bloqueur 15, optionnellement une couche d'adhésion 16, une deuxième couche donneuse d'oxygène 12b, une deuxième couche diélectrique à base d'oxyde 11b et optionnellement une couche de protection 18. Alternativement, la première couche donneuse d'oxygène 12a peut être disposée entre le substrat 10 et la première couche diélectrique à base d'oxyde 11a, et/ou la deuxième couche donneuse d'oxygène 12b peut être disposée au-dessus de la deuxième couche diélectrique à base d'oxyde 11b ou entre la deuxième couche diélectrique à base d'oxyde 11b et la couche de protection optionnelle 18.

Des exemples d'empilement selon l'invention peuvent être choisis parmi :
Substrat//TiOₓ/SnZnO/ZnO/Ag/Ti/ZnO/TiO₂/Si₃N₄
Substrat//SnZnO/TiOₓ/ZnO/Ag/Ti/ZnO/TiO₂/Si₃N₄
Substrat//TiOₓ/SnZnO/ZnO/Ti/Ag/Ti/ZnO/TiO₂/Si₃N₄
Substrat//SnZnO/TiOₓ/ZnO/Ti/Ag/Ti/ZnO/TiO₂/Si₃N₄
Substrat//TiO₂/ZnO/Ag/Ti/ZnO/SnZnO/TiOₓ/Si₃N₄
Substrat//TiO₂/ZnO/Ag/Ti/ZnO/TiOₓ/SnZnO/Si₃N₄
Substrat//TiO₂/ZnO/Ti/Ag/Ti/ZnO/SnZnO/TiOₓ/Si₃N₄
Substrat//TiO₂/ZnO/Ti/Ag/Ti/ZnO/TiOₓ/SnZnO/Si₃N₄
Substrat//TiOₓ/SnZnO/ZnO/Ag/Ti/ZnO/SnZnO/TiOₓ/Si₃N₄
Substrat//SnZnO/TiOₓ/ZnO/Ag/Ti/ZnO/SnZnO/TiOₓ/Si₃N₄
Substrat//TiOₓ/SnZnO/ZnO/Ag/Ti/ZnO/TiOₓ/SnZnO/Si₃N₄
Substrat//SnZnO/TiOₓ/ZnO/Ag/Ti/ZnO/TiOₓ/SnZnO/Si₃N₄
Substrat//TiOₓ/SnZnO/ZnO/Ti/Ag/Ti/ZnO/SnZnO/TiOₓ/Si₃N₄
Substrat//SnZnO/TiOₓ/ZnO/Ti/Ag/Ti/ZnO/SnZnO/TiOₓ/Si₃N₄
Substrat//TiOₓ/SnZnO/ZnO/Ti/Ag/Ti/ZnO/TiOₓ/SnZnO/Si₃N₄
Substrat//SnZnO/TiOₓ/ZnO/Ti/Ag/Ti/ZnO/TiOₓ/SnZnO/Si₃N₄

Le procédé selon l'invention comprend également une étape de traitement thermique à l'aide d'un laser. Ce traitement thermique permet d'apporter une énergie suffisante pour favoriser la cristallisation de la couche mince d'argent, par un mécanisme physico-chimique de croissance cristalline autour de germes déjà présents dans la couche, en restant en phase solide. Le fait de favoriser la cristallisation de la couche d'argent peut notamment se traduire en une disparition des éventuels résidus de phase amorphe et/ou en une augmentation de la taille des domaines cohérents de diffraction et/ou en une diminution de la densité de défauts ponctuels (lacunes, interstitiels) ou de défauts surfaciques ou volumiques tels que les macles.

Le procédé selon l'invention présente l'avantage de ne chauffer que l'empilement bas-émissif, sans échauffement significatif de la totalité du substrat. Il n'est ainsi plus nécessaire de procéder à un refroidissement lent et contrôlé du substrat avant la découpe ou le stockage du verre.

L'utilisation d'un rayonnement laser présente l'avantage d'obtenir des températures généralement inférieures à 100°C, et même souvent inférieures à 50°C au niveau de la face opposée à la première face du substrat (c'est-à-dire au niveau de la face non revêtue). Cette caractéristique particulièrement avantageuse est due au fait que le coefficient d'échange thermique est très élevé, typiquement supérieur à 400 W/(m².s). La puissance surfacique du rayonnement laser au niveau de l'empilement à traiter est même de préférence supérieure ou égale à 10, voire 20 ou 30 kW/cm².

Cette très forte densité d'énergie permet d'atteindre au niveau de l'empilement la température souhaitée extrêmement rapidement (en général en un temps inférieur ou égal à 1 seconde) et par conséquent de limiter d'autant la durée du traitement, la chaleur générée n'ayant alors pas le temps de diffuser au sein du substrat. Ainsi, chaque point de l'empilement est de préférence soumis au traitement selon l'invention (et notamment porté à une température supérieure ou égale à 300°C) pour une durée généralement inférieure ou égale à 1 seconde, voire 0,5 seconde.

Grâce au très fort coefficient d'échange thermique associé au procédé selon l'invention, la partie du verre située à 0,5 mm de la couche mince ne subit généralement pas de températures supérieures à 100°C. La température de la face du substrat opposée à la face traitée par le au moins un rayonnement laser n'excède de préférence pas 100°C, notamment 50°C et même 30°C pendant le traitement thermique.

L'essentiel de l'énergie apportée est donc « utilisée » par l'empilement afin d'améliorer les caractéristiques de cristallisation de la ou de chaque couche d'argent qu'il contient.

Ce procédé rend également possible l'intégration d'un dispositif de traitement laser sur les lignes de production continue existantes. Le laser peut être ainsi intégré dans une ligne de dépôt de couches, par exemple une ligne de dépôt par pulvérisation cathodique assistée par champ magnétique (procédé magnétron). La ligne comprend en général des dispositifs de manutention des substrats, une installation de dépôt, des dispositifs de contrôle optique, des dispositifs d'empilage. Les substrats défilent, par exemple sur des rouleaux convoyeurs, successivement devant chaque dispositif ou chaque installation. Le laser est de préférence situé juste après l'installation de dépôt de couches, par exemple à la sortie de l'installation de dépôt. Le substrat revêtu peut ainsi être traité en ligne après le dépôt de couches, à la sortie de l'installation de dépôt et avant les dispositifs de contrôle optique, ou après les dispositifs de contrôle optique et avant les dispositifs d'empilage des substrats. Il est également possible dans certains cas de réaliser le traitement thermique selon l'invention au sein même de l'enceinte de dépôt sous vide. Le laser est alors intégré à l'installation de dépôt. Par exemple, le laser peut être introduit dans une des chambres d'une installation de dépôt par pulvérisation cathodique.

Que le laser soit en dehors de ou intégré à l'installation de dépôt, ces procédés, dits en ligne ou en continu, sont préférables à un procédé en reprise dans lequel il serait nécessaire d'empiler les substrats de verre entre l'étape de dépôt et le traitement thermique.

Les procédés en reprise peuvent toutefois avoir un intérêt dans les cas où la mise en oeuvre du traitement thermique selon l'invention est faite dans un lieu différent de celui où est réalisé le dépôt, par exemple dans un lieu où est réalisée la transformation du verre. Le dispositif de rayonnement peut donc être intégré à d'autres lignes que la ligne de dépôt de couches. Il peut par exemple être intégré à une ligne de fabrication de vitrages multiples (doubles ou triples vitrages notamment), ou à une ligne de fabrication de vitrages feuilletés. Dans ces différents cas, le traitement thermique selon l'invention est de préférence réalisé avant la réalisation du vitrage multiple ou feuilleté.

Le rayonnement laser est de préférence issu d'au moins un faisceau laser formant une ligne (appelée « ligne laser » dans la suite du texte) qui irradie simultanément toute la largeur du substrat. Le faisceau laser en ligne peut notamment être obtenu à l'aide de systèmes optiques de focalisation. Afin de pouvoir irradier simultanément des substrats de grande largeur (>3m), la ligne laser est généralement obtenue en combinant plusieurs lignes laser élémentaires. L'épaisseur des lignes laser élémentaires est de préférence comprise entre 0,01 et 1 mm. Leur longueur est typiquement comprise entre 5 mm et 1 m. Les lignes laser élémentaires sont généralement juxtaposées côte à côte pour former une ligne laser unique de sorte que toute la surface de l'empilement soit traitée. Chaque ligne laser élémentaire est de préférence disposée perpendiculairement à la direction de défilement du substrat.

Les sources laser sont typiquement des diodes laser ou des lasers fibrés, notamment des lasers à fibre, à diodes ou encore à disque. Les diodes laser permettent d'atteindre de manière économique de fortes densités de puissance par rapport à la puissance électrique d'alimentation, pour un faible encombrement. L'encombrement des lasers fibrés est encore plus réduit, et la puissance linéique obtenue peut être encore plus élevée, pour un coût toutefois plus important. On entend par lasers fibrés des lasers dans lesquels le lieu de génération du rayonnement laser est déporté spatialement par rapport à son lieu de délivrance, le rayonnement laser étant délivré au moyen d'au moins une fibre optique. Dans le cas d'un laser à disque, le rayonnement laser est généré dans une cavité résonnante dans laquelle se trouve le milieu émetteur qui se présente sous la forme d'un disque, par exemple un disque mince (d'environ 0,1 mm d'épaisseur) en Yb:YAG. Le rayonnement ainsi généré est couplé dans au moins une fibre optique dirigée vers le lieu de traitement. Le laser peut également être à fibre, au sens où le milieu d'amplification est lui-même une fibre optique. Les lasers à fibre ou à disque sont de préférence pompés optiquement à l'aide de diodes laser. Le rayonnement issu des sources laser est de préférence continu.

La longueur d'onde du rayonnement laser, donc la longueur d'onde de traitement, est de préférence comprise dans un domaine allant de 500 à 1300 nm, notamment de 800 à 1100 nm. Des diodes laser de puissance émettant à une ou plusieurs longueurs d'onde choisie parmi 808 nm, 880 nm, 915 nm, 940 nm ou 980 nm se sont révélées particulièrement bien appropriées. Dans le cas d'un laser à disque, la longueur d'onde de traitement est par exemple de 1030 nm (longueur d'onde d'émission pour un laser Yb :YAG). Pour un laser à fibre, la longueur d'onde de traitement est typiquement de 1070 nm.

De préférence, l'absorption de l'empilement à la longueur d'onde du rayonnement laser est supérieure ou égale à 5%, de préférence supérieure à 10 % ou 15%, voire supérieure à 20% ou même 30%. L'absorption est définie comme étant égale à la valeur de 100% auxquelles sont soustraites la transmission et la réflexion de la couche.

Afin de traiter toute la surface du substrat revêtu, on crée un déplacement relatif entre d'une part le substrat revêtu de la couche et la ligne laser. Le substrat peut ainsi être mis en déplacement, notamment en défilement en translation en regard de la ligne laser fixe, généralement en dessous, mais éventuellement au-dessus de la ligne laser. Ce mode de réalisation est particulièrement appréciable pour un traitement en continu. De préférence, la vitesse de défilement, c'est-à-dire la différence entre les vitesses respectives du substrat et du laser, est supérieure ou égale à 1 m/min, voire supérieure à 2, 3, 4 ou 5 m/min, ou même avantageusement supérieure ou égale à 8 ou 10 m/min, ce afin d'assurer une grande vitesse de traitement.

Le substrat peut être mis en mouvement à l'aide de tous moyens mécaniques de convoyage, par exemple à l'aide de bandes, de rouleaux, de plateaux en translation. Le système de convoyage permet de contrôler et réguler la vitesse du déplacement. Si le substrat est en matière organique polymérique souple, le déplacement peut être réalisé à l'aide d'un système d'avance de films sous forme d'une succession de rouleaux.

Toutes les positions relatives du substrat et du laser sont bien entendu possibles, du moment que la surface du substrat peut être convenablement irradiée. Le substrat sera le plus généralement disposé de manière horizontale, mais il peut aussi être disposé verticalement, ou selon toute inclinaison possible. Lorsque le substrat est disposé horizontalement, le laser est généralement disposé de manière à irradier la face supérieure du substrat. Le laser peut également irradier la face inférieure du substrat. Dans ce cas, il faut que le système de support du substrat, éventuellement le système de convoyage du substrat lorsque ce dernier est en mouvement, laisse passer le rayonnement dans la zone à irradier. C'est le cas par exemple lorsque l'on utilise des rouleaux de convoyage : les rouleaux étant disjoints, il est possible de disposer le laser dans une zone située entre deux rouleaux successifs.

La présente invention concerne également un matériau comprenant un substrat revêtu d'un revêtement bas-émissif tel que décrit ci-dessus. Le matériau selon l'invention est susceptible d'être obtenu par le procédé selon l'invention. Le matériau selon l'invention est de préférence incorporé à un vitrage. La présente invention concerne donc également un vitrage comprenant un matériau comprenant un substrat revêtu d'un revêtement bas émissif tel que décrit ci-dessus. Le vitrage peut être simple ou multiple (notamment double ou triple), au sens où il peut comprendre plusieurs feuilles de verre ménageant un espace rempli de gaz. Le vitrage peut également être feuilleté et/ou trempé et/ou durci et/ou bombé.

L'invention est illustrée à l'aide des exemples de réalisation non limitatifs qui suivent.

### EXEMPLES

Sur un substrat en verre clair de 4 mm d'épaisseur commercialisé sous la dénomination SGG Planilux par la demanderesse sont déposés différents empilements bas-émissifs. Tous les empilements sont déposés, de manière connue, sur une ligne de pulvérisation cathodique (procédé magnétron) dans laquelle le substrat vient défiler sous différentes cibles.

Le tableau 1 indique pour chaque empilement testé l'épaisseur physique des couches, exprimée en nm. La première ligne correspond à la couche la plus éloignée du substrat, en contact avec l'air libre. L'échantillon C1 comprend une première couche diélectrique en oxyde de titane standard TiO₂ tandis que les échantillons C2 et I1 comprennent une première couche diélectrique en oxyde de titane sous-oxydée TiOₓ. L'échantillon Il comprend en outre une couche donneuse d'oxygène en oxyde mixte d'étain et de zinc SnZnO entre la première couche diélectrique et la couche de mouillage en oxyde de zinc.

**Tableau 1**

| Echantillon | C1 | C2 | I1 |
|---|---|---|---|
| Si₃N₄:Al | 30 | 30 | 30 |
| TiO₂ | 15 | 15 | 15 |
| ZnO :Al | 4 | 4 | 4 |
| Ti | 0,75 | 0,75 | 0,75 |
| Ag | 13,7 | 13,7 | 13,7 |
| ZnO :Al | 4 | 4 | 4 |
| SnZnO | - | - | 5 |
| TiO₂ | 27 | - | - |
| TiOₓ | - | 27 | 27 |

Le tableau 2 ci-après récapitule les paramètres du dépôt employés pour les différentes couches.

**Tableau 2**

| Couche | Cible employée | Pression de dépôt | Gaz |
|---|---|---|---|
| Si₃N₄ | Si :Al 8% | 1,5 µbar | Ar 22 sccm / N₂ 22 sccm |
| TiO₂ | TiOₓ sous-oxydée | 1,5 µbar | Ar 30 sccm / O₂ 6 sccm |
| TiOₓ | TiOₓ sous-oxydée | 1,5 µbar | Ar 30 sccm |
| ZnO :Al | AZO 2% Al₂O₃ | 1,5 µbar | Ar 20 sccm / O₂ 2sccm |
| Ti | Ti | 8 µbar | Ar 180 sccm |
| Ag | Ag | 8 µbar | Ar 180 sccm |
| SnZnO | SnZn 60/40wt% | 1,5 µbar | Ar 12 sccm / O₂ 19 sccm |

Les échantillons sont traités à l'aide d'un laser en ligne, obtenu par juxtaposition de plusieurs lignes élémentaires, émettant un rayonnement 50% 915 nm 50% 980 nm avec une puissance de 56 kW/cm², en regard duquel le substrat revêtu vient défiler en translation. Les échantillons ont été traités à différentes vitesses de défilement.

Pour chaque échantillon, la résistance carré a été mesurée avant et après traitement thermique. La résistance carré (Rsq) a été mesurée par une mesure sans contact par induction à l'aide d'un appareil SRM-12 commercialisé par Nagy. Le gain G de résistance carré est défini par G = (Rsqₐᵥₐₙₜ - Rsq_{après}) / Rsqₐᵥₐₙₜ. Un gain de 5% correspond ainsi donc à une diminution de 5% de la résistance carré.

La FIG.4 montre pour chaque échantillon le gain (G) de résistance carré de l'empilement après traitement thermique en fonction de la vitesse de traitement (V). Plus le gain est élevé, plus le traitement thermique est efficace. Ainsi, on peut remarquer que d'une part, par comparaison des échantillons I1 et C2, la présence de la couche donneuse d'oxygène dans l'échantillon I1 permet d'éviter la perte d'efficacité du recuit laser lorsque la première couche diélectrique est sous-oxydée, et d'autre part, par comparaison des échantillons I1 et C1, que la combinaison d'une première couche diélectrique sous-oxydée et d'une couche donneuse d'oxygène dans l'échantillon Il permet d'améliorer l'efficacité du recuit laser ou, à gain équivalent, d'augmenter la vitesse de traitement. Cet avantage peut être attribué au fait que la couche d'oxyde de titane sous-oxydée est plus absorbante qu'une couche standard à la longueur d'onde du laser.

Le tableau 3 résume les caractéristiques des échantillons obtenues pour des vitesses de traitement correspondant aux conditions optimales pour chacun des échantillons, c'est-à-dire conférant le meilleur compromis entre le gain de résistance carré élevée et faible absorption résiduelle (absorption lumineuse après traitement thermique). L'absorption lumineuse a été mesurée selon la norme Iso 9050:2003 à l'aide d'un spectrophotomètre CM-3700d commercialisé par Konika-Minolta.

**Tableau 3**

| Echantillon | C1 | C2 | I1 |
|---|---|---|---|
| Vitesse de traitement (m/min) | 4 | 10 | 8 |
| Rsp avant (Ω/sq) | 4,33 | 3.78 | 3,69 |
| Rsp après (Ω/sq) | 3,55 | 3.65 | 3,02 |
| Gain (%) | 18,0 | 3.44 | 18,2 |
| Absorption résiduelle (%) | 6,54 | 11.1 | 7,26 |

On peut voir d'après les résultats du tableau 3 qu'il est possible d'obtenir des caractéristiques de gain de résistance carré et d'absorption résiduelle pour l'échantillon Il selon l'invention comparables à celles de l'échantillon C1 tout en étant traité à une vitesse plus élevée, ce qui permet un gain de productivité.

## Revendications

1. Procédé d'obtention d'un matériau comprenant un substrat, choisi parmi une feuille de verre, de vitrocéramique, ou d'une matière organique polymérique, revêtu sur au moins une face d'un empilement de couches minces comprenant les étapes suivantes :
- on dépose sur ladite au moins une face dudit substrat un empilement de couches minces comprenant une première couche diélectrique, une couche de mouillage, une couche d'argent et une deuxième couche diélectrique,
- on traite thermiquement ladite au moins une face revêtue à l'aide d'au moins un rayonnement laser émettant dans au moins une longueur d'onde comprise entre 100 et 2000 nm;
**caractérisé en ce qu'**au moins une desdites première et deuxième couches diélectriques est une couche diélectrique à base d'oxyde sous-stoechiométrique et **en ce qu'**une couche donneuse d'oxygène est disposée au voisinage de la couche diélectrique à base d'oxyde sous-stoechiométrique, ladite couche donneuse d'oxygène étant à base d'un oxyde dont le potentiel redox est inférieur au matériau de la couche de mouillage.

2. Procédé selon la revendication 1, **caractérisé en ce que** le traitement thermiquement est réalisé de sorte que la résistance carrée de l'empilement est diminuée d'au moins 5%.

3. Procédé selon la revendication 1 ou 2, **caractérisé en ce que** le substrat est une feuille de verre.

4. Procédé selon l'une des revendications 1 à 3, **caractérisé en ce que** la couche de mouillage est une couche à base d'oxyde de zinc.

5. Procédé selon l'une des revendications 1 à 4, **caractérisé en ce que** la couche donneuse d'oxygène est en contact direct avec la couche diélectrique à base d'oxyde sous-stœchiométrique.

6. Procédé selon l'une des revendications 1 à 5, **caractérisé en ce que** la couche donneuse d'oxygène est choisie parmi une couche à base d'oxyde mixte de d'étain et de zinc.

7. Procédé selon l'une des revendications 1 à 6, **caractérisé en ce que** la couche donneuse d'oxygène a une épaisseur de 1 à 30 nm.

8. Procédé selon l'une des revendications 1 à 7, **caractérisé en ce que** chacune des première et deuxième couches diélectriques est une couche diélectrique à base d'oxyde.

9. Procédé selon la revendication 8, **caractérisé en ce qu'**une première couche donneuse d'oxygène est disposée au voisinage de la première couche diélectrique et une deuxième couche donneuse d'oxygène est disposée au voisinage de la deuxième couche diélectrique.

10. Procédé selon l'une des revendications 1 à 9, **caractérisé en ce que** la ou chaque couche diélectrique à base d'oxyde est une couche à base d'oxyde de titane, de silicium, de niobium ou de magnésium.

11. Procédé selon l'une des revendications 1 à 10, **caractérisé en ce que** la ou chaque couche diélectrique à base d'oxyde est une couche d'oxyde de titane sous-stoechiométrique TiOₓ.

12. Procédé selon la revendication 11, caractérisé en x est inférieur ou égal à 1,8.

13. Matériau comprenant un substrat, choisi parmi une feuille de verre, de vitrocéramique, ou d'une matière organique polymérique, revêtu d'un empilement de couches minces comprenant successivement une première couche diélectrique, une couche de mouillage, une couche d'argent et une deuxième couche diélectrique, **caractérisé en ce qu'**au moins une desdites premières et deuxièmes couches diélectriques est une couche diélectrique à base d'oxyde sous-stoechiométrique et une couche donneuse d'oxygène est disposée entre la couche diélectrique à base d'oxyde et le substrat ou entre la couche diélectrique à base d'oxyde sous-stoechiométrique et la couche de mouillage, ladite couche donneuse d'oxygène étant à base d'un oxyde dont le potentiel redox est inférieur au matériau de la couche de mouillage, et ladite couche donneuse d'oxygène étant disposée au voisinage de la couche diélectrique à base d'oxyde sous-stoechiométrique.

## Patentansprüche

1. Verfahren zum Erhalten eines Materials, umfassend ein Substrat, das aus einer Scheibe aus Glas, aus Glaskeramik oder aus einem organischen Polymermaterial ausgewählt ist, das auf mindestens einer Seite mit einer Stapelung von Dünnschichten beschichtet ist, umfassend die folgenden Schritte:
- Abscheiden auf die mindestens eine Seite des Substrats einer Stapelung von Dünnschichten, umfassend eine erste dielektrische Schicht, eine Benetzungsschicht, eine Silberschicht und eine zweite dielektrische Schicht,
- Wärmebehandeln der mindestens einen beschichteten Seite mittels mindestens einer Laserstrahlung, die mindestens eine Wellenlänge zwischen 100 und 2000 nm emittiert;
**dadurch gekennzeichnet, dass** mindestens eine der ersten und der zweiten dielektrischen Schicht eine dielektrische Schicht auf Basis von unterstöchiometrischem Oxid ist und dass eine Donorschicht aus Sauerstoff angrenzend an die dielektrische Schicht auf Basis von unterstöchiometrischem Oxid angeordnet ist, wobei die Donorschicht aus Sauerstoff auf Basis eines Oxids ist, dessen Redoxpotential kleiner als das Material der Benetzungsschicht ist.

2. Verfahren nach Anspruch 1, **dadurch gekennzeichnet, dass** das Wärmebehandeln so durchgeführt wird, dass der Flächenwiderstand der Stapelung um mindestens 5 % verringert wird.

3. Verfahren nach Anspruch 1 oder 2, **dadurch gekennzeichnet, dass** das Substrat eine Glasscheibe ist.

4. Verfahren nach einem der Ansprüche 1 bis 3,
**dadurch gekennzeichnet, dass** die Benetzungsschicht eine Schicht auf Basis von Zinkoxid ist.

5. Verfahren nach einem der Ansprüche 1 bis 4,
**dadurch gekennzeichnet, dass** die Donorschicht aus Sauerstoff in direktem Kontakt mit der dielektrischen Schicht auf Basis von unterstöchiometrischem Oxid ist.

6. Verfahren nach einem der Ansprüche 1 bis 5,
**dadurch gekennzeichnet, dass** die Donorschicht aus Sauerstoff aus einer Schicht auf Basis von Mischoxid aus Zinn und Zink ausgewählt ist.

7. Verfahren nach einem der Ansprüche 1 oder 6,
**dadurch gekennzeichnet, dass** die Donorschicht aus Sauerstoff eine Dicke von 1 bis 30 nm aufweist.

8. Verfahren nach einem der Ansprüche 1 bis 7,
**dadurch gekennzeichnet, dass** jeweils die erste und die zweite dielektrische Schicht eine dielektrische Schicht auf Basis von Oxid sind.

9. Verfahren nach Anspruch 8, **dadurch gekennzeichnet, dass** eine erste Donorschicht aus Sauerstoff angrenzend an die erste dielektrische Schicht angeordnet ist und eine zweite Donorschicht aus Sauerstoff angrenzend an die zweite dielektrische Schicht angeordnet ist.

10. Verfahren nach einem der Ansprüche 1 bis 9,
**dadurch gekennzeichnet, dass** die oder jede dielektrische Schicht auf Basis von Oxid eine Schicht auf Basis von Titan-, Silizium-, Niob- oder Magnesiumoxid ist.

11. Verfahren nach einem der Ansprüche 1 bis 10,
**dadurch gekennzeichnet, dass** die oder jede dielektrische Schicht auf Basis von Oxid eine Schicht auf Basis von unterstöchiometrischem Titanoxid TiOₓ ist.

12. Verfahren nach Anspruch 11, **dadurch gekennzeichnet, dass** x kleiner als oder gleich 1,8 ist.

13. Material, umfassend ein Substrat, das aus einer Scheibe aus Glas, aus Glaskeramik oder aus einem organischen Polymermaterial ausgewählt ist, das mit einer Stapelung von Dünnschichten beschichtet ist, umfassend aufeinanderfolgend eine erste dielektrische Schicht, eine Benetzungsschicht, eine Silberschicht und eine zweite dielektrische Schicht, **dadurch gekennzeichnet, dass** mindestens eine der ersten und der zweiten dielektrischen Schicht eine dielektrische Schicht auf Basis von unterstöchiometrischem Oxid ist und eine Donorschicht aus Sauerstoff zwischen der dielektrischen Schicht auf Basis von Oxid und dem Substrat oder zwischen der dielektrischen Schicht auf Basis von unterstöchiometrischem Oxid und der Benetzungsschicht angeordnet ist, wobei die Donorschicht aus Sauerstoff auf Basis von Oxid ist, dessen Redoxpotential kleiner als das Material der Benetzungsschicht ist, und die Donorschicht aus Sauerstoff angrenzend an die dielektrische Schicht auf Basis von unterstöchiometrischem Oxid angeordnet ist.

## Claims

1. A process for obtaining a material comprising a substrate, selected from a a sheet of glass, glass-ceramic or organic polymer material, coated, on at least one face, with a stack of thin layers, comprising the following stages:
- a stack of thin layers comprising a first dielectric layer, a wetting layer, a silver layer and a second dielectric layer is deposited on said at least one face of said substrate,
- said at least one coated face is heat treated using at least one laser radiation emitting in at least one wavelength between 100 and 2000 nm;
**characterized in that** at least one of said first and second dielectric layers is a dielectric layer based on substoichiometric oxide and **in that** an oxygen-donating layer is positioned in the vicinity of the dielectric layer based on substoichiometric oxide, said oxygen-donating layer being based on an oxide having a redox potential lower than the wetting layer.

2. The process as claimed in claim 1, **characterized in that** the treatment thermally is carried out so that the sheet resistance of the stack is decreased by at least 5%.

3. The process as claimed in claim 1 or 2, **characterized in that** the substrate is a glass sheet.

4. The process as claimed in one of claims 1 to 3, **characterized in that** the wetting layer is a layer based on zinc oxide.

5. The process as claimed in one of claims 1 to 4, **characterized in that** the oxygen-donating layer is in direct contact with the dielectric layer based on substoichiometric oxide.

6. The process as claimed in one of claims 1 to 5, **characterized in that** the oxygen-donating layer is chosen from a layer based on mixed oxide of tin and of zinc.

7. The process as claimed in one of claims 1 to 6, **characterized in that** the oxygen-donating layer has a thickness of 1 to 30 nm.

8. The process as claimed in one of claims 1 to 7, **characterized in that** each of the first and second dielectric layers is an oxide-based dielectric layer.

9. The process as claimed in claim 8, **characterized in that** a first oxygen-donating layer is positioned in the vicinity of the first dielectric layer and a second oxygen-donating layer is positioned in the vicinity of the second dielectric layer.

10. The process as claimed in one of claims 1 to 9, **characterized in that** the or each oxide-based dielectric layer is a layer based on titanium, silicon, niobium or magnesium oxide.

11. The process as claimed in one of claims 1 to 10, **characterized in that** the or each oxide-based dielectric layer is a layer of substoichiometric titanium oxide TiOₓ.

12. The process as claimed in claim 11, **characterized in that** x is less than or equal to 1.8.

13. A material comprising a substrate, selected from a a sheet of glass, glass-ceramic or organic polymer material, coated with a stack of thin layers successively comprising a first dielectric layer, a wetting layer, a silver layer and a second dielectric layer, **characterized in that** at least one of said first and second dielectric layers is a dielectric layer based on substoichiometric oxide and an oxygen-donating layer is positioned between the oxide-based dielectric layer and the substrate or between the dielectric layer based on substoichiometric oxide and the wetting layer, said oxygen-donating layer being based on an oxide having a redox potential lower than the wetting layer, and said oxygen-donating layer being positioned in the vicinity of the dielectric layer based on substoichiometric oxide.
